# FASCICULE DE BREVET EUROPEEN

(11) **EP 3 531 053 B1**
(45) Date de publication et mention de la délivrance du brevet: **08.09.2021**
(21) Numéro de dépôt: 19158926.6
(22) Date de dépôt: 22.02.2019
(51) Int. Cl.: F28D 9/00, B01J 19/24, B01J 19/00, F28D 21/00

(54) **RÉACTEUR ÉCHANGEUR COMPORTANT DES CANAUX D'INJECTION ET DE RÉPARTITION DE RÉACTIFS**
REAKTOR-WÄRMETAUSCHER, DER EINSPRITZ- UND VERTEILUNGSKANÄLE DER REAGENZIEN UMFASST
EXCHANGER REACTOR COMPRISING INJECTION AND REAGENT DISTRIBUTION CHANNELS

(30) Priorité: 26.02.2018 FR 1851654
(43) Date de publication de la demande: 28.08.2019
(73) Titulaire: Commissariat à l'énergie atomique et aux énergies alternatives, 75015 Paris (FR)
(72) Inventeur: CHAISE, Albin, 38054 GRENOBLE Cedex 09 (FR); BENGAOUER, Alain, 38054 GRENOBLE Cedex 9 (FR); MORO-LE GALL, Isabelle, 38054 GRENOBLE Cedex 09 (FR)
(74) Mandataire: Brevalex

(56) Documents cités:
- EP-A1- 2 617 487
- WO-A1-2004/091762
- WO-A1-2007/101749

## Description

### DOMAINE TECHNIQUE

La présente invention se rapporte au domaine général des réacteurs échangeurs destinés à la mise en œuvre de réactions endothermiques ou exothermiques.

L'invention trouve de nombreuses applications dans tous types de procédés mettant en œuvre des réactions endothermiques ou exothermiques, et notamment fortement endothermiques ou exothermiques. De tels procédés peuvent par exemple utiliser un catalyseur solide, notamment sous forme de poudre.

Ces procédés peuvent notamment comprendre des procédés de synthèse de carburants et de combustibles, par exemple des combustibles liquides, tels que le méthanol (MeOH), ou gazeux, tels que le méthane ou substitut de gaz naturel (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à toutes les situations où la maîtrise de la température est un point crucial, notamment à des réactions très endothermiques ou très exothermiques, catalytiques ou non catalytiques, telles que celle de méthanation du monoxyde ou du dioxyde de carbone en présence d'hydrogène ou encore des réactions du type de celle de Fischer-Tropsch, de celle de reformage humide ou à sec du méthane ou d'autres hydrocarbures, ou encore des réactions d'oxydation. En effet, le problème de la gestion thermique de ces réactions, notamment celles fortement exothermiques de méthanation du monoxyde ou du dioxyde de carbone en présence d'hydrogène, est crucial car l'évolution de la température dans le réacteur échangeur conditionne le taux de conversion et la sélectivité vers le méthane de la réaction, ainsi que la stabilité dans le temps des performances du catalyseur. De plus, ces réactions sont thermodynamiquement favorisées par des pressions élevées.

Préférentiellement, l'invention trouve son application dans la synthèse du méthane selon un procédé de conversion d'électricité en gaz (ou encore de type « Power-to-Gas » en anglais), c'est-à-dire dans lequel l'hydrogène provient de la dissociation de l'eau par électrolyse, tel qu'enseigné dans la publication « Materials Science and Engineering », A179/A180, 1994, K. Hashimoto. La puissance électrique est alors fournie par des énergies renouvelables, par exemple de type éolien ou solaire, par nature intermittentes, ce qui induit un fonctionnement intermittent du réacteur de conversion qui doit fournir des temps de démarrage et de suivi de charge aussi courts que possible. Dans ce contexte d'application « Power-to-Gas », la taille des unités est généralement assez faible, typiquement de l'ordre de 100 à 5000 kW. Néanmoins, il est à noter que l'invention n'est pas limitée à la méthanation du monoxyde ou du dioxyde de carbone, ni même à une réaction entre des phases gazeuses, ni même encore aux seules réactions nécessitant un catalyseur. Aussi, de façon générale, on peut remarquer qu'au moins une réaction impliquant au moins deux, voire trois fluides se produit dans les canaux du réacteur échangeur.

L'invention propose ainsi un réacteur échangeur comportant au moins un canal d'injection spécifique et au moins un canal de répartition spécifique de fluide réactif, ainsi qu'un procédé de fabrication d'un tel réacteur échangeur.

### ÉTAT DE LA TECHNIQUE ANTÉRIEURE

On connaît déjà de nombreuses architectures de réacteurs échangeurs catalytiques utilisés dans l'industrie pour assurer le contrôle et le pilotage thermique de réactions chimiques endothermiques ou exothermiques. Les principaux types de réacteurs échangeurs connus pour les réactions exothermiques sont décrits ci-après.

Tout d'abord, la technologie la plus simple de réacteurs échangeurs catalytiques est la technologie de réacteurs dits « à lit fixe ». Dans ce cas, le réacteur échangeur se présente sous la forme d'un cylindre, à l'intérieur duquel le catalyseur est placé. Le catalyseur peut être présent sous la forme de granulés, par exemple du type extrudats, sphères ou anneaux de Raschig, entre autres. L'apport ou l'évacuation des calories sont généralement opérés par un fluide caloporteur qui circule dans un serpentin situé sur la paroi externe du réacteur ou qui est directement introduit à l'intérieur du réacteur.

La mise en œuvre de réactions exothermiques au sein de ce type de réacteur échangeur pose de nombreuses difficultés. En effet, la mauvaise dissipation de la chaleur, due principalement à la faible conductivité thermique de l'ensemble formé par le gaz et le catalyseur, entraîne la formation de points chauds au sein du réacteur. Or, la présence de ces points chauds localisés entraîne des vitesses de réaction plus importantes et peut être à l'origine d'un emballement thermique du réacteur. Aussi, ces températures élevées peuvent nuire aux performances du réacteur échangeur, entraînant notamment une baisse de sélectivité ou de conversion, causer la désactivation du catalyseur, et ainsi diminuer grandement sa durée de vie et poser des problèmes de sécurité.

Dans le cas de réactions endothermiques, la formation de points froids est moins problématique car elle n'entraîne pas d'emballement thermique du réacteur. Cependant, ces points froids entraînent toujours une baisse importante des performances du réacteur échangeur.

Par ailleurs, ce type de réacteur échangeur à lit fixe présente aussi l'inconvénient d'engendrer une perte de charge élevée à travers le lit catalytique.

L'utilisation de réacteurs échangeurs à lits fixes multitubulaires permet d'augmenter l'efficacité de la gestion thermique de ces réacteurs. De tels réacteurs sont constitués de plusieurs tubes, de quelques centimètres de diamètre, remplis de catalyseur et placés dans une enceinte (ou calandre) où circule le fluide caloporteur. L'utilisation de tubes plus étroits peut cependant conduire à des phénomènes de court-circuit hydraulique (ou « by-pass » en anglais) aux parois, qui participent à la formation de points chauds et réduisent le temps de contact des réactifs avec le catalyseur, entraînant ainsi une diminution des performances du réacteur échangeur. De plus, la diminution de la taille des grains de catalyseur pouvant accompagner la réduction du diamètre des tubes, elle entraîne également une augmentation de la perte de charge. En outre, la gestion thermique de ce type de réacteur échangeur demeure parfois toujours insuffisante.

Par ailleurs, les solutions mises en place pour contrôler les réactions fortement exothermiques sont souvent complexes et coûteuses. Il peut s'agir par exemple de la dilution du catalyseur par des particules inertes, du recyclage de gaz, de la distribution des réactifs le long des réacteurs ou de manière étagée entre plusieurs réacteurs, ou encore de la dilution des réactifs par un gaz inerte. Dans tous les cas, ces solutions ont pour but de diminuer les vitesses de réaction et l'efficacité catalytique du réacteur échangeur afin de pouvoir contrôler l'exothermie de la réaction.

Aussi, l'architecture du type « à lit fixe » des réacteurs échangeurs présente l'avantage de la simplicité de fabrication mais rend difficile le contrôle thermique et nécessite l'utilisation de catalyseurs stables à haute température.

Une autre technologie de réacteurs échangeurs concerne les réacteurs échangeurs structurés. Inspirés des échangeurs thermiques à plaques, ces réacteurs échangeurs dans lesquels le fluide caloporteur circule dans des canaux caloporteurs insérés entre deux nappes de canaux réactifs pour leur refroidissement, où se trouve le catalyseur et où a lieu la réaction chimique, se prêtent mieux au contrôle de la température des procédés. En effet, la structuration et surtout la réduction de la section de passage du fluide caloporteur par rapport à une simple calandre permet d'intensifier les échanges thermiques entre le fluide caloporteur et le réacteur afin d'évacuer ou d'apporter des calories avec une meilleure efficacité. Pour de tels réacteurs échangeurs, les canaux réactifs, comme les canaux caloporteurs, peuvent être constitués d'un canal gravé dans une plaque ou encore constitués par l'espace laissé entre deux plaques. Selon la technologie choisie pour le refroidissement, ces réacteurs peuvent être isothermes ou anisothermes.

Par ailleurs, il existe également la technologie des réacteurs échangeurs à lits fluidisés. De tels réacteurs ont été développés pour répondre au problème de transfert thermique dans les lits fixes. Ces réacteurs présentent la particularité de mettre en mouvement les grains de catalyseur, d'une taille de l'ordre de la centaine de micromètres, ce qui permet un mélange qui améliore les transferts. Les réacteurs échangeurs à lits fluidisés offrent l'avantage d'une bonne homogénéité thermique dans les réacteurs, ce qui évite les points chauds. De plus, cette technologie présente de nombreux autres inconvénients, et notamment la formation de particules fines entraînées en dehors du réacteur, des difficultés d'extrapolation en taille ou encore des performances moindres en raison de rétro-mélanges dus au mouvement du catalyseur.

La combinaison de réacteurs échangeurs du même type ou de types différents au sein d'une même unité peut également être envisagée afin d'améliorer la conversion, la flexibilité ou la valorisation de la chaleur récupérée.

Ainsi, par exemple, le brevet US 4,298,694 B1 propose de combiner un réacteur échangeur adiabatique et un réacteur échangeur isotherme dont chacun traite une partie du flux d'entrée de gaz afin de récupérer la chaleur de réaction sous la forme de vapeur surchauffée, laquelle est obtenue par un échangeur connecté en sortie de l'étage adiabatique, tout en produisant un gaz à forte teneur en méthane grâce à la faible température obtenue en sortie du réacteur échangeur isotherme.

Par ailleurs, il est connu de l'homme du métier que la mise en place en série de plusieurs réacteurs offre une souplesse supplémentaire. Par exemple, l'injection des réactifs peut être étagée entre plusieurs réacteurs, ce qui limite le dégagement de puissance de chacun et permet un meilleur contrôle thermique.

L'injection étagée de réactifs dans un seul réacteur est aussi une solution connue dans le cas de réacteurs tubulaires. Cependant, cette solution nécessite la mise en place d'un tube d'injection dans chacun des tubes du réacteur tubulaire, comme enseigné dans le brevet américain US 8,961,909 B2.

Les réacteurs échangeurs à plaques permettent de lever les limitations inhérentes aux réacteurs « à lit fixe » adiabatiques et aux réacteurs « structurés » à tube-calandre. Ils utilisent une superposition de canaux réactifs et de canaux de refroidissement dont les dimensions réduites permettent d'augmenter drastiquement les transferts de masse et de chaleur au sein du réacteur. La compacité et l'efficacité en termes de conversion et de sélectivité peuvent ainsi être améliorées et le passage à l'échelle peut se faire en combinant l'augmentation du nombre de canaux dans un réacteur et la mise en place de plusieurs réacteurs en parallèle tout en conservant les dimensions caractéristiques des canaux.

Parmi les techniques connues de l'homme du métier pour l'assemblage de plaques préalablement usinées, on peut par exemple citer : l'assemblage par brasage de plaques usinées; l'assemblage par soudage par fusion avec ou sans apport de matière (laser, faisceau d'électrons (FE), TIG, ...) ; l'assemblage par soudage par diffusion à l'état solide, entre autres.

L'assemblage par soudage par diffusion à l'état solide est particulièrement approprié car il permet d'assurer l'assemblage de l'ensemble des isthmes inter-canaux tout en préservant la continuité métallurgique. Ces deux conditions sont essentielles pour garantir la tenue mécanique du réacteur en pression (de 5 à 100 bars), en température (de 200°C à 600°C), en présence de cyclage thermique et de gaz ou liquides corrosifs. La technique d'assemblage par soudage diffusion peut aussi être mise en œuvre par Compaction Isostatique à Chaud (CIC). Cette technique est connue de l'homme du métier, et notamment décrite dans les demandes de brevet français FR 2 879 489 A1, FR 2 936 179 A1, FR 2 949 699 A1, FR 2 950 551 A1, FR 2 955 039 A1, FR 2 989 158 A1 ou encore FR 3 005 499 A1.

On peut également mentionner les techniques de fabrication additive qui permettent de réaliser des réacteurs échangeurs métalliques comprenant des superpositions ou imbrications de canaux réactifs et de refroidissement.

Si la conception et la fabrication de réacteurs échangeurs à plaques et leur application à des réactions catalytiques fortement exothermiques sont connues, l'injection étagée des réactifs est un point rendu délicat par le grand nombre de canaux et l'impossibilité d'accéder aux canaux situés au cœur du réacteur pour y injecter les réactifs. Il existe ainsi un besoin pour permettre une telle injection étagée des réactifs par le biais d'une solution technique simple, efficace et peu coûteuse.

Par ailleurs, un des principaux problèmes auxquels la technologie de réacteurs échangeurs à plaques doit répondre est la maîtrise de la température du fluide qui réagit. Or, il se peut que le fluide réagisse de façon très localisée dans le réacteur, par exemple la réaction peut être située principalement dans les premiers centimètres des canaux réactifs. L'échange à cet endroit doit donc être particulièrement intense pour maîtriser la température du fluide.

La demande internationale WO 03/033983 A2 présente un exemple de réacteur muni d'un premier étage dans lequel l'échange thermique est intensifié par les petites dimensions des canaux à l'entrée du réacteur, et par la section faible du canal, ce qui entraîne une vitesse de fluide élevée. La vitesse importante permet d'utiliser une plus grande surface pour réaliser le transfert thermique.

Une autre méthode connue consiste à injecter progressivement le mélange de fluides réactifs dans le réacteur afin d'étaler ou de fragmenter spatialement la zone de réaction sur une plus grande longueur de canal. Ainsi, une surface plus importante est disponible pour réaliser l'échange thermique.

Le brevet US 7,402,719 B2 présente un réacteur échangeur à micro canaux dans lequel trois fluides sont convoyés en co-courant. Deux fluides réactifs A et C sont mélangés progressivement grâce à une série de perçages entre les parois qui séparent initialement les canaux du fluide A et du fluide C. Ce dispositif nécessite la présence de trois nappes de canaux puisqu'à chaque canal de fluide A correspond un canal de fluide C qui l'alimente au-dessous et un canal de fluide B au-dessus. La présence de trois nappes est peu performante du point de vue de la compacité du réacteur échangeur.

La demande de brevet EP 2 617 487 A1 divulgue un réacteur échangeur à plaques selon le préambule de la revendication 1.

### EXPOSÉ DE L'INVENTION

L'invention a pour but de remédier au moins partiellement aux besoins mentionnés précédemment et aux inconvénients relatifs aux réalisations de l'art antérieur.

L'invention vise notamment à permettre une injection de réactifs en un ou plusieurs points de canaux réactifs d'un réacteur échangeur à plaques sans impacter l'encombrement global du réacteur échangeur.

L'invention a ainsi pour objet, selon l'un de ses aspects, un réacteur échangeur à plaques selon la revendication 1 et un procédé de fabrication d'un réacteur échangeur à plaques selon la revendication 11.

Différents modes de réalisations sont divulgués dans les revendications dépendantes.

Dans toute la description, les éventuels termes « longitudinal » et « transversal » sont respectivement à comprendre par rapport aux directions d'étendue des canaux réactifs et des canaux de refroidissement. Plus précisément, la direction d'étendue des canaux réactifs est ici appelée direction longitudinale, et la direction d'étendue des canaux de refroidissement est ici appelée direction transversale.

Ainsi, une dimension longitudinale est à considérer selon la direction d'étendue des canaux réactifs et une dimension transversale est à considérer selon la direction d'étendue des canaux de refroidissement. Plus précisément encore, la plus grande dimension longitudinale d'un élément est sa plus grande dimension selon un axe parallèle aux axes d'étendue des canaux réactifs. De même, la plus grande dimension transversale de cet élément est sa plus grande dimension selon un axe parallèle aux axes d'étendue des canaux de refroidissement.

De façon avantageuse, tous les canaux réactifs s'étendent selon une même direction, à savoir la première direction, appelée direction longitudinale, et tous les canaux de refroidissement s'étendent selon une même direction, à savoir la deuxième direction, appelée direction transversale. De plus, avantageusement encore, tous les canaux réactifs s'étendent sensiblement perpendiculairement par rapport aux canaux de refroidissement. De cette façon, les directions longitudinale et transversale sont sensiblement perpendiculaires entre elles.

La longueur d'un élément correspond à sa plus grande dimension longitudinale et la largeur de cet élément correspond à sa plus grande dimension transversale.

De façon avantageuse, partant d'un réacteur échangeur à plaques comprenant des canaux de refroidissement disposés en nappe dans lesquels un fluide B circule et des canaux réactifs disposés en nappe dans lesquels un fluide A circule, l'invention permet d'injecter un fluide C en un ou plusieurs points dans la longueur des canaux réactifs de fluide A, tout en augmentant la compacité du réacteur échangeur. Ainsi, le réacteur échangeur selon l'invention permet de se passer d'une nappe de canaux sur trois par rapport à l'agencement décrit dans le brevet US 7,402,719 B2, ce qui diminue la complexité du réacteur échangeur et améliore sa compacité.

La disposition alternée des nappes de canaux réactifs et de canaux de refroidissement permet d'obtenir une disposition en courant croisé, c'est-à-dire qu'un fluide A va circuler dans une nappe de canaux réactifs dont les canaux sont orientés sensiblement perpendiculairement aux canaux de refroidissement d'une nappe de canaux de refroidissement dans lesquels circule un fluide B.

Le corps de réacteur peut avantageusement être métallique, étant par exemple réalisé en acier inoxydable ou encore en alliages d'aluminium, de nickel ou de cuivre, entre autres.

Les canaux réactifs et/ou les canaux de refroidissement peuvent présenter une largeur comprise entre 0,5 mm et 30 mm et/ou une hauteur comprise entre 0,5 mm et 30 mm.

Une nappe de canaux de refroidissement peut comprendre un ou plusieurs canaux de répartition. Le ou les canaux de répartition peuvent notamment présenter sensiblement les mêmes dimensions, notamment la largeur et/ou la hauteur, que celles des canaux de refroidissement.

Une nappe de canaux réactifs peut comprendre un ou plusieurs canaux d'injection. Le ou les canaux d'injection peuvent notamment présenter sensiblement les mêmes dimensions, notamment la largeur et/ou la hauteur, que celles des canaux réactifs.

Ledit au moins un orifice d'injection peut alors se présenter sous la forme d'un conduit d'injection connectant fluidiquement ledit au moins un canal d'injection et ledit au moins un canal de répartition.

Ledit au moins un orifice d'injection peut alors se présenter sous la forme d'un orifice d'injection dudit au moins un canal d'injection débouchant directement dans ledit au moins un canal de répartition.

Par ailleurs, ledit au moins un orifice de répartition peut se présenter sous la forme d'un conduit de répartition connectant fluidiquement ledit au moins un canal de répartition et ledit au moins un canal réactif.

De plus, un canal d'injection prédéterminé peut communiquer fluidiquement avec au moins deux canaux de répartition, lesquels communiquent eux-mêmes fluidiquement avec au moins deux canaux réactifs de sorte qu'une injection du deuxième fluide réactif par le biais du canal d'injection prédéterminé permet d'alimenter une pluralité de canaux réactifs d'une même nappe de canaux réactifs.

Par ailleurs, un canal d'injection prédéterminé peut communiquer fluidiquement avec au moins deux canaux de répartition par le biais d'au moins deux orifices d'injection.

Le premier fluide réactif et le deuxième fluide réactif peuvent être les mêmes, les canaux réactifs et le ou les canaux d'injection étant connectés fluidiquement à un même distributeur de fluide réactif.

En outre, les canaux réactifs et le ou les canaux d'injection peuvent présenter des sections de passage différentes.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, selon une vue en perspective et en transparence, un exemple de réacteur échangeur à plaques,
- la figure 2 illustre, partiellement et en perspective, un principe de fonctionnement d'un réacteur échangeur à plaques conforme à l'invention, par exemple tel que celui de la figure 1,
- la figure 3 illustre encore, selon une vue partielle de dessus, un principe de fonctionnement d'un réacteur échangeur à plaques conforme à l'invention, par exemple tel que celui de la figure 1,
- les figures 4 à 8 illustrent, partiellement en coupe, des exemples de réalisation des canaux d'un réacteur échangeur conforme à l'invention,
- les figures 9 et 10 représentent, partiellement et en perspective, des variantes de réalisation d'un réacteur échangeur conforme à l'invention,
- la figure 11 représente, partiellement en perspective, un exemple de superposition de plaques pour former un réacteur échangeur à plaques par un procédé de fabrication conforme à l'invention,
- les figures 12 à 17 représentent, en perspective, des exemples de plaques pour la fabrication du réacteur échangeur de la figure 11,
- la figure 18 représente, partiellement en perspective et en transparence, le réacteur échangeur à plaques de la figure 11 à l'issu du procédé de fabrication conforme à l'invention, et
- les figures 19 et 20 illustrent partiellement, respectivement en vue de dessus et en coupe selon XX-XX de la figure 19, une variante de réalisation d'un réacteur échangeur à plaques conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La présente invention vise à implanter un dispositif d'injection ou de distribution étagée dans un réacteur échangeur à plaques, avantageusement fabriqué par un procédé de soudage diffusion ou encore par Compaction Isostatique à Chaud (CIC).

Un réacteur échangeur à plaques est constitué par la superposition de plaques métalliques, généralement en acier, usinées, par exemple par gravage mécanique, électroérosion ou laser, et ultérieurement assemblées par le biais du procédé de soudage diffusion de sorte à obtenir un réacteur échangeur compact et permettant une bonne maîtrise de la température à l'intérieur de ses canaux.

De façon générale, un tel réacteur échangeur est plus précisément constitué d'une superposition de canaux appelés « canaux réactifs », qui sont ceux dans lesquels les gaz réactifs circulent, dans lesquels un éventuel catalyseur est présent et dans lesquels la réaction généralement exothermique se déroule, avec des canaux dits « canaux de refroidissement » ou « canaux caloporteurs », qui sont ceux dans lesquels le fluide caloporteur circule afin de limiter la montée en température dans les canaux réactifs.

La maîtrise fine de la température dans les canaux réactifs est un point crucial pour assurer le bon fonctionnement d'un tel réacteur échangeur à plaques. Dans le cas de réactions exothermiques équilibrées, une température trop faible conduira à une faible cinétique chimique et donc à une faible conversion de réactifs alors qu'une température trop élevée conduira à l'atteinte de la limite thermodynamique de la réaction mise en jeu et à une accélération du vieillissement, qui peut notamment se faire par frittage des catalyseurs.

Pour pouvoir maîtriser la température dans les canaux réactifs, plusieurs solutions peuvent être envisagées : augmenter le nombre de canaux de refroidissement par rapport au nombre de canaux réactifs, optimiser la géométrie des canaux réactifs, diluer le catalyseur, entre autres. Toutefois, à chacune de ces solutions vient s'opposer un inconvénient majeur. En effet, augmenter le nombre de canaux de refroidissement ne peut pas se faire de façon infinie et se réalise au détriment de la compacité. De plus, optimiser la géométrie des canaux réactifs se résume essentiellement à en diminuer la hauteur, ce qui pose d'importants problèmes de remplissage des canaux réactifs en catalyseur. Enfin, diluer le catalyseur revient à dégrader l'efficacité de l'échangeur.

Les exemples de réalisation de réacteurs échangeurs à plaques conformes à l'invention, qui vont être décrits par la suite, permettent de surmonter l'ensemble de ces inconvénients par l'étagement de la distribution d'un ou plusieurs des fluides réactifs.

Autrement dit, en entrée du réacteur échangeur, on ne fait pas entrer la totalité du débit du ou des fluides considérés mais seulement une fraction. Puis, une deuxième voie d'entrée est ménagée dans le réacteur échangeur pour y amener une nouvelle fraction du débit du ou des fluides, et ainsi de suite. Il est possible de faire autant de points d'entrée que nécessaire pour que la totalité du débit que l'on souhaite injecter dans le réacteur le soit effectivement.

Cet étagement de la distribution du ou des fluides réactifs se fait avantageusement sans dégrader pour autant les caractéristiques du réacteur échangeur, et permet d'alimenter simultanément l'ensemble des canaux réactifs. Le réacteur échangeur proposé par l'invention est également de complexité limitée. Par exemple, il ne requiert pas d'usinage, de soudage ou de modifications de l'échangeur trop complexes à réaliser et/ou trop coûteuses.

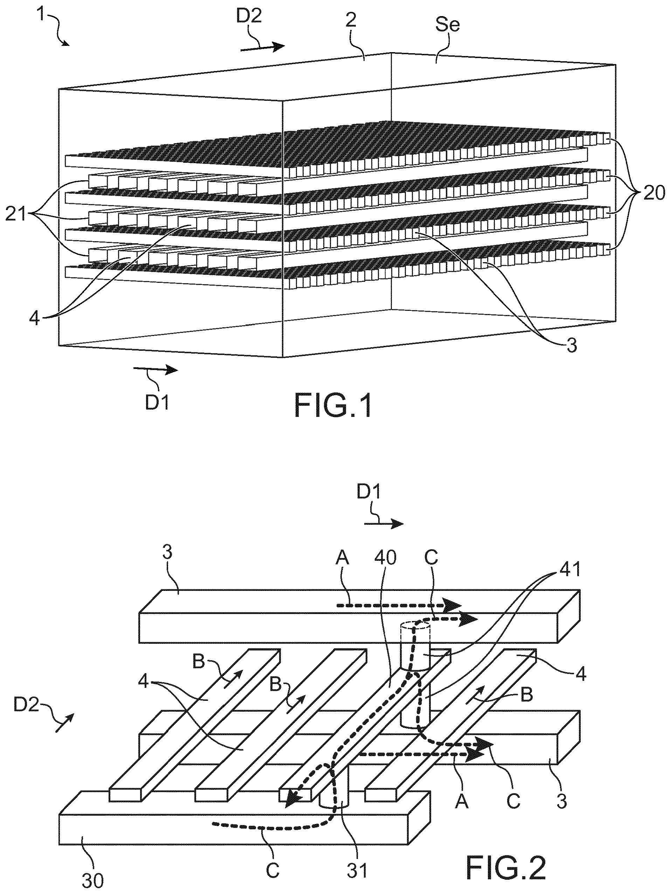

En référence aux figures 1 à 20, on va ainsi décrire plusieurs exemples de réalisation de réacteurs échangeurs à plaques 1 conformes à l'invention, ainsi que les différentes étapes du procédé de fabrication conforme à l'invention.

Tout d'abord, en référence à la figure 1, on a représenté en perspective un réacteur échangeur à plaques 1.

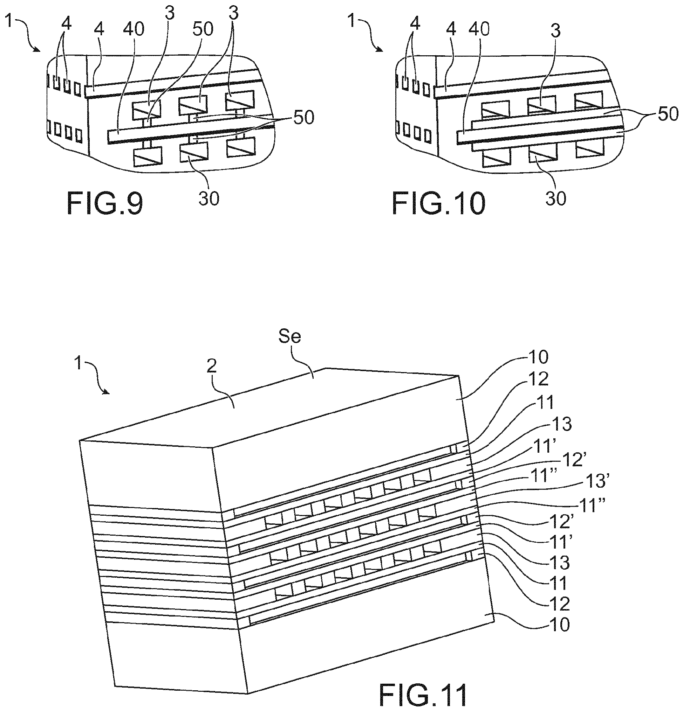

Ce réacteur 1, de surface extérieure Se, comporte un corps de réacteur 2 formé par l'empilement d'une pluralité de plaques 10, 11, 12, 13 décrites par la suite en référence à la figure 11.

De plus, il comporte un circuit réactif qui comprend ici quatre nappes de canaux réactifs 20, chacune comprenant une pluralité de canaux réactifs 3 s'étendant parallèlement les uns par rapport aux autres selon une première direction D1 et dans lesquels circule un premier fluide réactif A.

En outre, le réacteur 1 comporte un circuit de fluide caloporteur pour refroidir les canaux réactifs 3 qui comprend ici trois nappes de canaux de refroidissement 21, chacune comprenant une pluralité de canaux de refroidissement 4 s'étendant parallèlement les uns par rapport aux autres selon une deuxième direction D2 et dans lesquels circule un fluide de refroidissement B.

Conformément à l'invention, les première direction D1 et deuxième direction D2 sont perpendiculaires entre elles de sorte que les nappes 20 et 21 sont en courant croisé. De plus, les nappes de canaux réactifs 20 et de canaux de refroidissement 21 sont superposées les unes par rapport aux autres de façon alternée.

En outre, comme il sera décrit par la suite en référence à la figure 2, le réacteur 1 comporte des canaux d'injection 30 d'un deuxième fluide réactif C et des canaux de répartition 40 de ce deuxième fluide réactif C dans des canaux réactifs 3 dans lesquels circule le premier fluide réactif A.

Pour ce faire, les canaux d'injection 30 communiquent fluidiquement avec les canaux de répartition 40 par le biais d'orifices d'injection 31 et les canaux de répartition 40 communiquent fluidiquement avec les canaux réactifs 3 par le biais d'orifices de répartition 41.

De façon avantageuse, les canaux de répartition 40 sont chacun situés dans une nappe de canaux de refroidissement 21 et s'étendent sensiblement parallèlement à la deuxième direction D2. De plus, dans cet exemple, les canaux d'injection 30 sont chacun situés dans une nappe de canaux réactifs 20 et s'étendent sensiblement parallèlement à la première direction D1.

Ainsi, l'invention permet d'organiser une distribution avantageuse d'un fluide C dans le réacteur 1 pour le mélanger avec le fluide A en des points d'injection particuliers en détournant l'usage de certains canaux des nappes 20 et 21, qui deviennent des nappes de canaux modifiées.

La figure 2 permet de visualiser schématiquement la circulation des fluides A et C dans le réacteur 1. Tous les canaux ne sont volontairement pas représentés. La matière métallique autour des canaux n'est également pas représentée.

Ainsi, le fluide C contenant dans un canal d'injection 30 est conduit vers un canal de répartition 40 par le biais d'un orifice d'injection 31 qui se présente ici sous la forme d'un conduit d'injection 31.

Par ailleurs, le canal de répartition 40 permet de distribuer transversalement le fluide C pour l'injecter dans les différents canaux réactifs 3 grâce aux orifices de répartition 41 sous forme de conduits de répartition 41.

Comme indiqué précédemment, pour réaliser la distribution du fluide C, il est possible d'inclure un canal d'injection 30 dans une nappe 20 contenant par ailleurs des canaux réactifs 3, et d'inclure un canal de répartition 40 dans une nappe 21 contenant par ailleurs des canaux de refroidissement 4. Autrement dit, en utilisant certains canaux des nappes 20 et 21 pour faire circuler le fluide C, il est possible de se passer d'une troisième nappe qui serait dédiée uniquement au fluide C. Ainsi, il est possible de réduire les dimensions du réacteur échangeur 1 pour un même volume de fluide réactif traité.

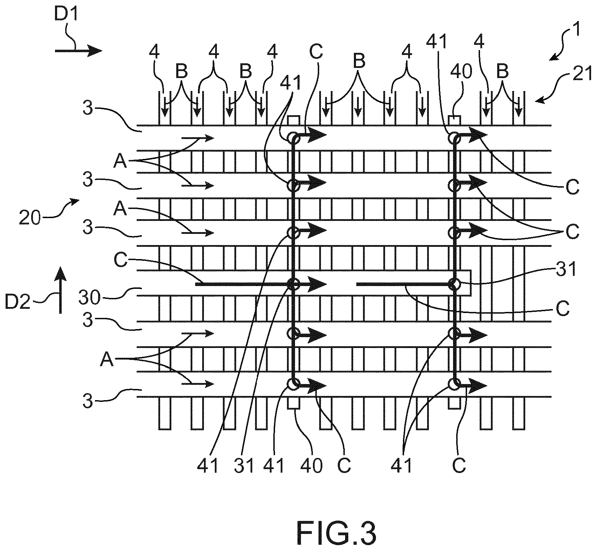

La figure 3 représente une vue schématique d'une nappe 20 et d'une nappe 21 superposées, ces nappes étant modifiées par la présence de canaux d'injection 30 et de répartition 40. Il est possible de réaliser plusieurs injections à différentes abscisses dans les canaux réactifs 3. Cela présente l'avantage d'étaler la réaction sur une plus grande distance et donc de faciliter le contrôle en température du procédé.

Ainsi, dans le mode de réalisation selon l'invention de la figure 3, la nappe 20 de canaux réactifs comporte un canal d'injection 30 et la nappe 21 de canaux de refroidissement comporte deux canaux de répartition 40. De plus, le canal d'injection 30 comporte deux orifices d'injection 31 pour communiquer fluidiquement avec chacun des canaux de répartition 40, et chaque canal de répartition 40 comporte une pluralité d'orifices de répartition 41 pour communiquer fluidiquement avec tous les canaux réactifs 3. Aussi, l'injection du fluide réactif C par le biais du canal d'injection 30 permet d'alimenter la pluralité de canaux réactifs 3 d'une même nappe 20 de canaux réactifs.

Par ailleurs, un des problèmes à résoudre est le contrôle du débit de fluide C dans les canaux réactifs 3 en chaque point d'injection. En particulier, il est préférable d'avoir le même débit de fluide C injecté dans chaque canal réactif 3 pour une même abscisse, c'est-à-dire pour un même canal de répartition 40. De plus, la proportion de débit de fluide C à injecter entre deux abscisses différentes doit pouvoir être contrôlée.

Il est ainsi possible de contrôler la répartition des débits injectés de fluide C à chaque canal de répartition 40 en jouant sur la perte de charge engendrée au niveau des orifices d'injection 31 successifs des canaux d'injection 30. Pour moduler cette perte de charge, il est possible par exemple de jouer sur la section de passage des orifices d'injection 31.

De plus, il est possible de contrôler la répartition des débits injectés à une abscisse donnée dans les différents canaux réactifs 3 en jouant sur la perte de charge engendrée au niveau des orifices de répartition 41 d'un canal de répartition 40. Pour moduler cette perte de charge, il est possible par exemple de jouer sur la section de passage des orifices de répartition 41 ou sur les caractéristiques d'un matériau filtrant placé dans les orifices de répartition 41.

Par ailleurs, si les fluides A et C sont les mêmes et qu'une transformation du fluide A intervient au cours de son séjour dans le canal réactif 3, par exemple à cause de la présence de catalyseur, alors les canaux réactifs 3 et d'injection 30 peuvent être avantageusement connectés au même distributeur en amont du réacteur 1. La proportion entre le fluide passant par les canaux réactifs 3 et d'injection 30 sera alors contrôlée par l'équilibre des pertes de charge dans les canaux réactifs 3 et les canaux d'injection 30 et de répartition 40. Dans ce cas, il est possible de jouer sur la section des canaux d'injection 30 ou la section des orifices d'injection 31 pour contrôler la proportion d'injection secondaire. En particulier, les canaux d'injection 30 et réactifs 3 peuvent avoir des sections différentes.

Pour une nappe 21 donnée, un canal d'injection 30 peut distribuer le fluide C dans une des deux nappes 20 adjacentes, supérieure ou inférieure, ou bien encore dans ces deux nappes 20. Les nappes 20 peuvent à leur tour distribuer le fluide C dans une des nappes 21 adjacentes, supérieure ou inférieure, ou bien encore dans ces deux nappes 21.

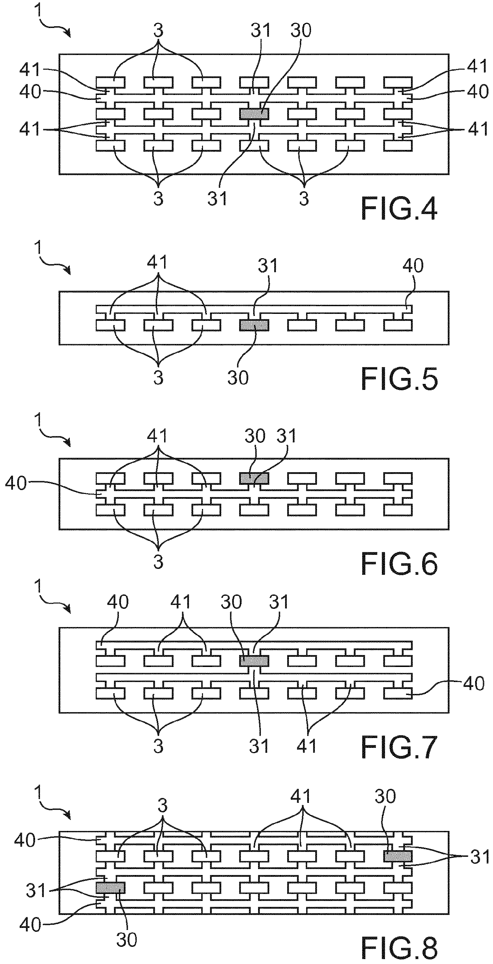

Les figures 4 à 8 montrent des exemples de motifs élémentaires pour la distribution du fluide C dans les canaux d'injection 30, de répartition 40 et réactifs 3. Ces figures 4 à 8 sont des vues en coupe dans un plan perpendiculaire aux canaux réactifs 3 et passant par les canaux de répartition 40.

Dans tous ces exemples, la section de passage des orifices d'injection 31 est supérieure à la section de passage des orifices de répartition 41.

Dans l'exemple de la figure 4, un canal d'injection 30 prédéterminé d'une nappe 20 prédéterminée communique fluidiquement avec un canal de répartition 40 d'une première nappe de canaux de refroidissement 21 adjacente située au-dessus de la nappe de canaux réactifs 20 prédéterminée et avec un canal de répartition 40 d'une deuxième nappe de canaux de refroidissement 21 adjacente située en dessous de la nappe de canaux réactifs 20 prédéterminée, les première et deuxième nappes de canaux de refroidissement 21 étant ainsi situées de part et d'autre de la nappe de canaux réactifs 20 prédéterminée. De plus, un canal de répartition 40 prédéterminé d'une nappe de canaux de refroidissement 21 prédéterminée communique fluidiquement avec les canaux réactifs 3 d'une première nappe de canaux réactifs 20 adjacente située au-dessus de la nappe de canaux de refroidissement 21 prédéterminée et avec les canaux réactifs 3 d'une deuxième nappe de canaux réactifs 20 adjacente située en dessous de la nappe de canaux de refroidissement 21 prédéterminée, les première et deuxième nappes de canaux réactifs 20 étant ainsi situées de part et d'autre de la nappe de canaux de refroidissement 21 prédéterminée.

Dans l'exemple de la figure 5, un canal d'injection 30 prédéterminé d'une nappe de canaux réactifs 20 prédéterminée communique fluidiquement avec un canal de répartition 40 d'une nappe de canaux de refroidissement 21 adjacente, située au-dessus de la nappe de canaux réactifs 20 prédéterminée. De plus, un canal de répartition 40 prédéterminé d'une nappe de canaux de refroidissement 21 prédéterminée communique fluidiquement avec les canaux réactifs 3 d'une nappe de canaux réactifs 20 adjacente, située en dessous de la nappe de canaux de refroidissement 21 prédéterminée.

Dans l'exemple de la figure 6, un canal d'injection 30 prédéterminé d'une nappe de canaux réactifs 20 prédéterminée communique fluidiquement avec un canal de répartition 40 d'une nappe de canaux de refroidissement 21 adjacente, située en dessous de la nappe de canaux réactifs 20 prédéterminée. De plus, un canal de répartition 40 prédéterminé d'une nappe de canaux de refroidissement 21 prédéterminée communique fluidiquement avec les canaux réactifs 3 d'une première nappe de canaux réactifs 20 adjacente située au-dessus de la nappe de canaux de refroidissement 21 prédéterminée et avec les canaux réactifs 3 d'une deuxième nappe de canaux réactifs 20 adjacente située en dessous de la nappe de canaux de refroidissement 21 prédéterminée, les première et deuxième nappes de canaux réactifs 20 étant ainsi situées de part et d'autre de la nappe de canaux de refroidissement 21 prédéterminée.

Dans l'exemple de la figure 7, un canal d'injection 30 prédéterminé d'une nappe de canaux réactifs 20 prédéterminée communique fluidiquement avec un canal de répartition 40 d'une première nappe de canaux de refroidissement 21 adjacente située au-dessus de la nappe de canaux réactifs 20 prédéterminée et avec un canal de répartition 40 d'une deuxième nappe de canaux de refroidissement 21 adjacente située en dessous de la nappe de canaux réactifs 20 prédéterminée, les première et deuxième nappes de canaux de refroidissement 21 étant ainsi situées de part et d'autre de la nappe de canaux réactifs 20 prédéterminée. De plus, un canal de répartition 40 prédéterminé d'une nappe de canaux de refroidissement 21 prédéterminée communique fluidiquement avec les canaux réactifs 3 d'une nappe de canaux réactifs 20 adjacente, située en dessous de la nappe de canaux de refroidissement 21 prédéterminée.

Dans l'exemple de la figure 8, un canal d'injection 30 prédéterminé d'une nappe de canaux réactifs 20 prédéterminée communique fluidiquement avec un canal de répartition 40 d'une première nappe de canaux de refroidissement 21 adjacente située au-dessus de la nappe de canaux réactifs 20 prédéterminée et avec un canal de répartition 40 d'une deuxième nappe de canaux de refroidissement 21 adjacente située en dessous de la nappe de canaux réactifs 20 prédéterminée, les première et deuxième nappes de canaux de refroidissement 21 étant ainsi situées de part et d'autre de la nappe de canaux réactifs 20 prédéterminée. De plus, un canal de répartition 40 prédéterminé d'une nappe de canaux de refroidissement 21 prédéterminée communique fluidiquement avec les canaux réactifs 3 d'une première nappe de canaux réactifs 20 adjacente située au-dessus de la nappe de canaux de refroidissement 21 prédéterminée et avec les canaux réactifs 3 d'une deuxième nappe de canaux réactifs 20 adjacente située en dessous de la nappe de canaux de refroidissement 21 prédéterminée, les première et deuxième nappes de canaux réactifs 20 étant ainsi situées de part et d'autre de la nappe de canaux de refroidissement 21 prédéterminée. En outre, cet exemple de la figure 8 illustre le fait que les canaux d'injection 30 ne sont pas nécessairement superposés.

Par ailleurs, si les canaux réactifs 3 comprennent un catalyseur en grain, les orifices de répartition 41 pourront être équipés d'élément(s) de filtre 50, notamment réalisés en mousse métallique et/ou en matériau fritté, par exemple acier inoxydable, laiton, bronze, alliages de nickel, aluminium, entre autres, comme illustré sur la figure 9.

L'élément de filtre 50 peut aussi consister à placer dans une paroi de séparation 11, décrite par la suite, des nappes 20 et 21, une languette filtrante 50 d'un matériau filtrant de type mousse ou fritté pour assurer la même fonction, comme illustré sur la figure 10.

Le principe de distribution et de mélange décrit par l'invention peut être mis en œuvre dans des procédés de fabrication tels que la compression isostatique à chaud (CIC), l'empilement de plaques brasées, la fabrication additive, entre autres. On va maintenant donner un exemple de réalisation par CIC.

La figure 11 illustre un ensemble de plaques superposées pour former un réacteur échangeur 1 conforme à l'invention, avant traitement par CIC. L'ordre de superposition est le suivant : une plaque de fermeture 10 destinée à former au moins en partie la surface extérieure Se du corps de réacteur 2; une nappe de 24 canaux de refroidissement (référence 12) ; une plaque de séparation 11; une nappe de 6 canaux réactifs (référence 13) ; une plaque de séparation 11' ; une nappe de 22 canaux de refroidissement et 2 canaux de répartition (référence 12') ; une plaque de séparation 11" ; une nappe de 5 canaux réactifs et un canal d'injection (référence 13') ; une plaque de séparation 11" ; une nappe de 22 canaux de refroidissement et 2 canaux de répartition (référence 12') ; une plaque de séparation 11' ; une nappe de 6 canaux réactifs (référence 13) ; une plaque de séparation 11; une nappe de 24 canaux de refroidissement (référence 12) ; et une plaque de fermeture 10.

Afin de parvenir à cette disposition de nappes de canaux, différentes plaques sont empilées. L'empilement décrit ici est symétrique par rapport à la plaque 13'.

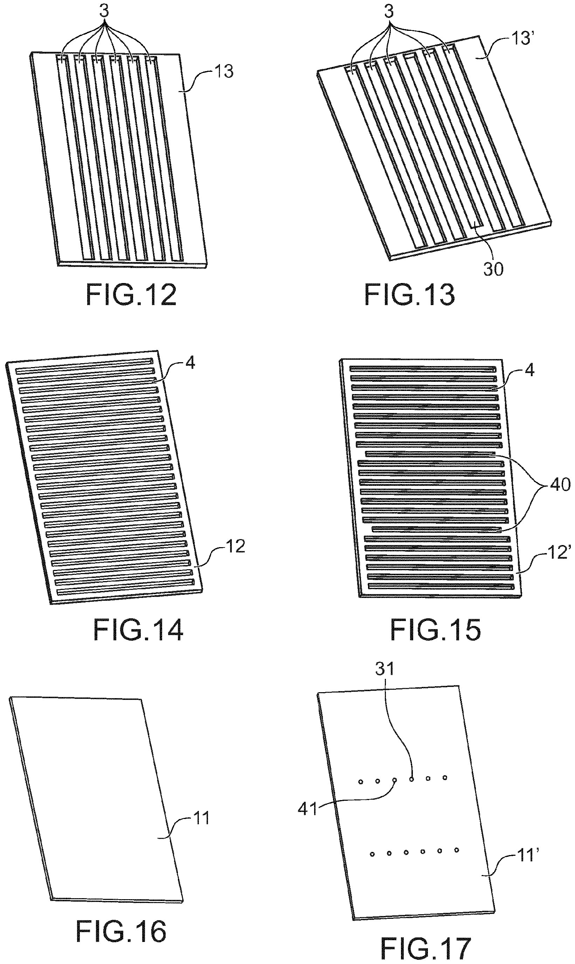

Les figures 12 à 17 permettent de visualiser respectivement les plaques 13, 13', 12, 12', 11 et 11', utilisées pour réaliser l'empilement de nappes constituant le réacteur échangeur 1. On remarque que les orifices de répartition 41 et les orifices d'injection 31 sont formés au moins en partie dans une plaque de séparation 11'.

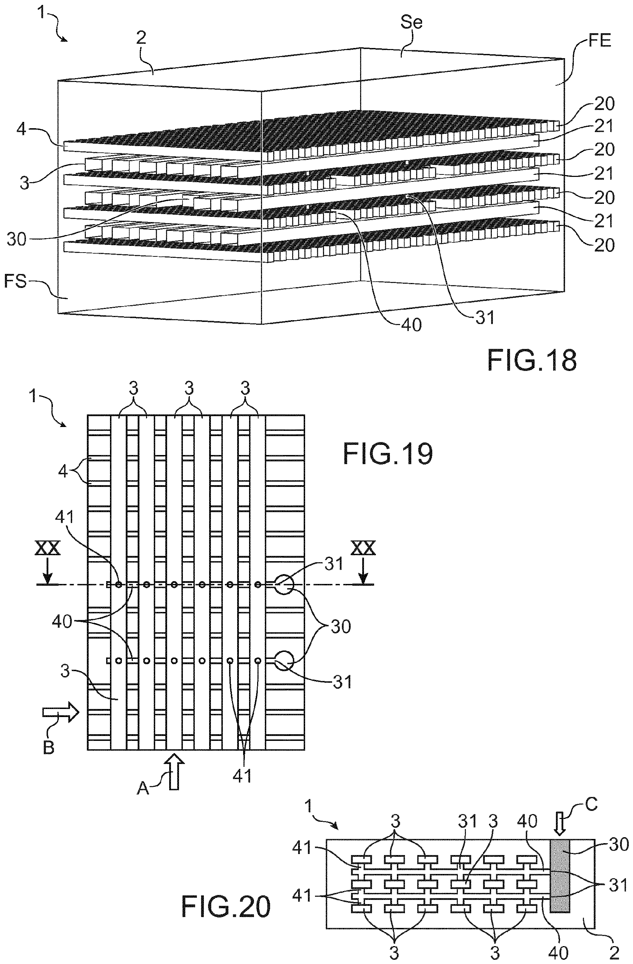

Après la mise en conteneur sous vide, le traitement thermique en CIC de l'empilement permet de souder les plaques ensemble. Le bloc métallique ainsi formé contenant les canaux est usiné de façon à faire déboucher les canaux réactifs 3 et les canaux de refroidissement 4. La figure 18 montre en transparence le corps de réacteur 2 usiné et les canaux 3, 4, 30 et 40. Sur cette figure 18, les références FE et FS représentent respectivement la face d'entrée des fluides A et C, et la face de sortie du mélange de fluide A+C. Il faut noter que les canaux de répartition 40 ne débouchent pas en dehors du réacteur échangeur 1. De plus, le canal d'injection 30 ne débouche pas du côté de la sortie du mélange de fluide A+C, soit la face FS du réacteur 1.

Les figures 19 et 20 permettent par ailleurs d'illustrer une variante de réalisation de l'invention dans laquelle les canaux d'injection 30 sont des canaux formés dans le corps de réacteur 2 de sorte à s'étendre sensiblement perpendiculairement aux première D1 et deuxième D2 directions, entre des canaux de refroidissement 4 adjacents. Alors, les orifices d'injection 31 se présentent sous la forme d'orifices d'injection 31 des canaux d'injection 30 débouchant directement dans les canaux de répartition 40.

Plus précisément, les canaux d'injection 30 se présentent sous la forme de collecteurs 31. Ainsi, on peut séparer les injections des fluides A et C dans le corps de réacteur 2 avec la géométrie représentée sur la figure 20 pour le fluide C. Il n'y a ainsi plus de canal d'injection situé dans une nappe 20 de réactifs puisqu'il prend la forme d'un collecteur formé perpendiculairement aux canaux réactifs 3. Autrement dit, le fluide C est injecté par le dessus du réacteur 1 en plusieurs points.

L'avantage de cette variante est qu'il est plus facile de contrôler le débit de fluide C injecté à chaque abscisse dans les canaux réactifs 3. Ce contrôle s'effectue avec des débitmètres extérieurs au corps du réacteur 2, ce qui permet de moduler les débits en cours de fonctionnement.

Bien entendu, l'invention n'est pas limitée aux exemples de réalisation qui viennent d'être décrit auparavant. Diverses modifications peuvent y être apportées par l'homme du métier.

## Revendications

1. Réacteur échangeur à plaques (1), destiné à la mise en œuvre de réactions endothermiques ou exothermiques, comportant :
- un corps de réacteur (2), formé par l'empilement d'une pluralité de plaques (10, 11, 12, 13),
- un circuit réactif comprenant au moins une nappe de canaux réactifs (20) comprenant une pluralité de canaux réactifs (3) s'étendant sensiblement parallèlement les uns par rapport aux autres selon une première direction (D1), dans lesquels circule un premier fluide réactif (A),
- un circuit de fluide caloporteur pour refroidir les canaux réactifs (3), comprenant au moins une nappe de canaux de refroidissement (21) comprenant une pluralité de canaux de refroidissement (4) s'étendant sensiblement parallèlement les uns par rapport aux autres selon une deuxième direction (D2), dans lesquels circule un fluide de refroidissement (B),
les première (D1) et deuxième (D2) directions sont sensiblement perpendiculaires entre elles,
au moins une nappe de canaux réactifs (20) et une nappe de canaux de refroidissement (21) sont superposées les unes par rapport aux autres de façon alternée, le réacteur échangeur à plaques (1) comporte au moins un canal d'injection (30) d'un deuxième fluide réactif (C) et au moins un canal de répartition (40) du deuxième fluide réactif (C) dans au moins un canal réactif (3) dans lequel circule le premier fluide réactif (A), ledit au moins un canal d'injection (30) communiquant fluidiquement avec ledit au moins un canal de répartition (40) par le biais d'au moins un orifice d'injection (31) et ledit au moins un canal de répartition (40) communiquant fluidiquement avec ledit au moins un canal réactif (3) par le biais d'un orifice de répartition (41),
le ou les canaux de répartition (40) sont chacun situés dans une nappe de canaux de refroidissement (21) et s'étendent sensiblement parallèlement à la deuxième direction (D2),
**caractérisé en ce qu'**un canal d'injection (30) prédéterminé communique fluidiquement avec au moins deux canaux de répartition (40), lesquels communiquent eux-mêmes fluidiquement avec au moins deux canaux réactifs (3) de sorte qu'une injection du deuxième fluide réactif (C) par le biais du canal d'injection (30) prédéterminé permet d'alimenter une pluralité de canaux réactifs (3) d'une même nappe de canaux réactifs (20).

2. Réacteur échangeur selon la revendication 1, **caractérisé en ce que** le ou les canaux d'injection (30) sont chacun situés dans une nappe de canaux réactifs (20) et s'étendent sensiblement parallèlement à la première direction (D1).

3. Réacteur échangeur selon la revendication 1, **caractérisé en ce que** le ou les canaux d'injection (30) sont des canaux formés dans le corps de réacteur (2) de sorte à s'étendre sensiblement perpendiculairement aux première (D1) et deuxième (D2) directions, notamment entre des canaux de refroidissement (4) adjacents.

4. Réacteur selon l'une quelconque des revendications précédentes, **caractérisé en ce qu'**un canal de répartition (40) prédéterminé communique fluidiquement avec une pluralité de canaux réactifs (3) par le biais d'une pluralité d'orifices de répartition (41) configurés de telle sorte que le débit du deuxième fluide réactif (C) est sensiblement identique pour chaque orifice de répartition (41), chaque orifice de répartition (41) ayant notamment sensiblement la même section de passage.

5. Réacteur selon l'une quelconque des revendications 2 à 4, hormis la revendication 3, **caractérisé en ce qu'**un canal d'injection (30) prédéterminé d'une nappe de canaux réactifs (20) prédéterminée communique fluidiquement avec au moins un canal de répartition (40) d'une nappe de canaux de refroidissement (21) adjacente, située au-dessus ou en dessous de la nappe de canaux réactifs (20) prédéterminée.

6. Réacteur selon l'une quelconque des revendications 2 à 4, hormis la revendication 3, **caractérisé en ce qu'**un canal d'injection (30) prédéterminé d'une nappe de canaux réactifs (20) prédéterminée communique fluidiquement avec au moins un canal de répartition (40) d'une première nappe de canaux de refroidissement (21) adjacente située au-dessus de la nappe de canaux réactifs (20) prédéterminée et avec au moins un canal de répartition (40) d'une deuxième nappe de canaux de refroidissement (21) adjacente située en dessous de la nappe de canaux réactifs (20) prédéterminée, les première et deuxième nappes de canaux de refroidissement (21) étant ainsi situées de part et d'autre de la nappe de canaux réactifs (20) prédéterminée.

7. Réacteur selon l'une quelconque des revendications 2 à 6, hormis la revendication 3, **caractérisé en ce qu'**un canal de répartition (40) prédéterminé d'une nappe de canaux de refroidissement (21) prédéterminée communique fluidiquement avec au moins un canal réactif (3) d'une nappe de canaux réactifs (20) adjacente, située au-dessus ou en dessous de la nappe de canaux de refroidissement (21) prédéterminée.

8. Réacteur selon l'une quelconque des revendications 2 à 6, hormis la revendication 3, **caractérisé en ce qu'**un canal de répartition (40) prédéterminé d'une nappe de canaux de refroidissement (21) prédéterminée communique fluidiquement avec au moins un canal réactif (3) d'une première nappe de canaux réactifs (20) adjacente située au-dessus de la nappe de canaux de refroidissement (21) prédéterminée et avec au moins un canal réactif (3) d'une deuxième nappe de canaux réactifs (20) adjacente située en dessous de la nappe de canaux de refroidissement (21) prédéterminée, les première et deuxième nappes de canaux réactifs (20) étant ainsi situées de part et d'autre de la nappe de canaux de refroidissement (21) prédéterminée.

9. Réacteur selon l'une quelconque des revendications précédentes, **caractérisé en ce que** les canaux réactifs (3) comportent un catalyseur, notamment un catalyseur en grains, et **en ce que** le ou les orifices de répartition (41) comportent un élément de filtre (50), notamment réalisé en mousse métallique et/ou en matériau fritté, par exemple acier inoxydable, laiton, bronze, alliages de nickel, aluminium.

10. Réacteur selon la revendication 9, **caractérisé en ce que** l'élément de filtre (50) se présente sous la forme d'une languette filtrante (50) s'étendant le long d'une plaque de séparation (11) située entre une nappe de canaux réactifs (20) et une nappe de canaux de refroidissement (21).

11. Procédé de fabrication d'un réacteur échangeur à plaques (1) selon l'une quelconque des revendications précédentes, hormis la revendication 3, destiné à la mise en œuvre de réactions endothermiques ou exothermiques et comprenant un corps de réacteur (2) formé par l'empilement d'une pluralité de plaques (10, 11, 12, 13), **caractérisé en ce qu'**il comporte les étapes suivantes :
(i) fabrication d'au moins une nappe de canaux réactifs (20) comprenant uniquement une pluralité de canaux réactifs (3),
(ii) fabrication d'au moins une nappe de canaux de refroidissement (21) comprenant uniquement une pluralité de canaux de refroidissement (4) destinés à refroidir les canaux réactifs (3),
(iii) fabrication d'au moins une nappe de canaux réactifs (20) comprenant une pluralité de canaux réactifs (3) et un ou plusieurs canaux d'injection (30),
(iv) fabrication d'au moins une nappe de canaux de refroidissement (21) comprenant une pluralité de canaux de refroidissement (4) et un ou plusieurs canaux de répartition (40).

12. Procédé selon la revendication 11, **caractérisé en ce qu'**il comporte en outre les étapes suivantes :
(v) fabrication d'au moins une plaque de fermeture (10) destinée à former au moins en partie la surface extérieure (Se) du corps de réacteur (2),
(vi) fabrication d'au moins une plaque dite « plaque de séparation » (11) destinée à être superposée entre deux nappes constitutives du réacteur échangeur à plaques (1), notamment entre une nappe de canaux réactifs (20) et une nappe de canaux de refroidissement (21).

13. Procédé selon la revendication 12, **caractérisé en ce qu'**au moins une plaque de séparation (11) comporte un ou plusieurs orifices d'injection (31) et/ou un ou plusieurs orifices de répartition (41).

14. Procédé selon l'une des revendications 11 à 13, **caractérisé en ce que** le réacteur échangeur (1) est fabriqué par brasage, par fabrication additive ou encore par Compaction Isostatique à Chaud (CIC).

## Patentansprüche

1. Platten-Austauscherreaktor (1), welcher zur Durchführung von endothermen oder exothermen Reaktionen bestimmt ist, umfassend:
- einen Reaktorkörper (2), der durch Stapeln einer Mehrzahl von Platten (10, 11, 12, 13) gebildet ist,
- einen Reaktivkreislauf, der wenigstens eine Schicht von Reaktivkanälen (20) umfasst, die eine Mehrzahl von Reagenzkanälen (3) umfasst, die sich im Wesentlichen parallel zueinander in einer ersten Richtung (D1) erstrecken, und in denen eine erste Reaktivflüssigkeit (A) zirkuliert,
- einen Wärmeübertragungsfluidkreislauf zum Kühlen der Reaktivkanäle (3), der wenigstens eine Schicht von Kühlkanälen (21) umfasst, die eine Mehrzahl von Kühlkanälen (4) aufweist, die sich im Wesentlichen parallel zueinander in einer zweiten Richtung (D2) erstrecken, und in denen ein Kühlfluid (B) zirkuliert,
wobei die erste (D1) und zweite (D2) Richtung im Wesentlichen senkrecht zueinander stehen,
wobei wenigstens eine Schicht von Reaktivkanälen (20) und eine Schicht von Kühlkanälen (21) abwechselnd übereinander angeordnet sind,
wobei der Platten-Austauscherreaktor (1) wenigstens einen Einspritzkanal (30) für eine zweite Reaktivflüssigkeit (C) und wenigstens einen Verteilerkanal (40) für die zweite Reaktivflüssigkeit (C) in wenigstens einem Reaktivkanal (3), in dem die erste Reaktivflüssigkeit (A) zirkuliert, aufweist, wobei der wenigstens eine Einspritzkanal (30) mit dem wenigstens einen Verteilerkanal (40) über wenigstens eine Einspritzöffnung (31) in Fluidverbindung steht und der wenigstens eine Verteilerkanal (40) mit dem wenigstens einen Reaktivkanal (3) über eine Verteileröffnung (41) in Fluidverbindung steht,
wobei die Verteilerkanäle (40) jeweils in einer Schicht von Kühlkanälen (21) angeordnet sind und sich im Wesentlichen parallel zur zweiten Richtung (D2) erstrecken, **dadurch gekennzeichnet,**
**dass** ein vorbestimmter Einspritzkanal (30) in Fluidverbindung mit wenigstens zwei Verteilerkanälen (40) steht, die ihrerseits in Fluidverbindung mit wenigstens zwei Reaktivkanälen (3) stehen, so dass ein Einspritzen der zweiten Reaktivflüssigkeit (C) über den vorbestimmten Einspritzkanal (30) ermöglicht, eine Mehrzahl von Reaktivkanälen (3) einer gleichen Schicht von Reaktivkanälen (20) zu versorgen.

2. Austauscherreaktor nach Anspruch 1, **dadurch gekennzeichnet, dass** der Einspritzkanal oder die Einspritzkanäle (30) jeweils in einer Schicht von Reaktivkanälen (20) angeordnet sind und sich im Wesentlichen parallel zur ersten Richtung (D1) erstrecken.

3. Austauscherreaktor nach Anspruch 1, **dadurch gekennzeichnet, dass** der Einspritzkanal oder die Einspritzkanäle (30) Kanäle sind, die im Reaktorkörper (2) derart gebildet sind, dass sie sich im Wesentlichen senkrecht zur ersten (D1) und zweiten (D2) Richtung erstrecken, insbesondere zwischen benachbarten Kühlkanälen (4).

4. Reaktor nach einem der vorhergehenden Ansprüche, **dadurch gekennzeichnet, dass** ein vorbestimmter Verteilerkanal (40) mit einer Mehrzahl von Reaktivkanälen (3) in Fluidverbindung steht über eine Mehrzahl von Verteileröffnungen (41), die derart ausgebildet sind, dass die Strömungsgeschwindigkeit der zweiten Reaktivflüssigkeit (C) für jede Verteileröffnung (41) im Wesentlichen gleich ist, wobei insbesondere jede Verteileröffnung (41) im Wesentlichen den gleichen Strömungsquerschnitt aufweist.

5. Reaktor nach einem der Ansprüche 2 bis 4, mit Ausnahme von Anspruch 3, **dadurch gekennzeichnet, dass** ein vorbestimmter Einspritzkanal (30) einer vorbestimmten Schicht von Reaktivkanälen (20) mit wenigstens einem Verteilerkanal (40) einer benachbarten Schicht von Kühlkanälen (21), die sich oberhalb oder unterhalb der vorbestimmten Schicht von Reaktivkanälen (20) befindet, in Fluidverbindung steht.

6. Reaktor nach einem der Ansprüche 2 bis 4, ausgenommen Anspruch 3, **dadurch gekennzeichnet, dass** ein vorbestimmter Einspritzkanal (30) einer vorbestimmten Schicht von Reaktivkanälen (20) in Fluidverbindung mit wenigstens einem Verteilerkanal (40) einer ersten benachbarten Schicht von Kühlkanälen (21) steht, die sich oberhalb der vorbestimmten Schicht von Reaktivkanälen (20) befinden, und mit wenigstens einem Verteilerkanal (40) einer zweiten benachbarten Schicht von Kühlkanälen (21), die sich unterhalb der vorbestimmten Schicht von Reaktivkanälen (20) befinden, wobei die erste und die zweite Schicht von Kühlkanälen (21) auf diese Weise auf beiden Seiten der vorbestimmten Schicht von Reaktivkanälen angeordnet sind.

7. Reaktor nach einem der Ansprüche 2 bis 6, ausgenommen Anspruch 3, **dadurch gekennzeichnet, dass** ein vorbestimmter Verteilerkanal (40) einer vorbestimmten Schicht von Kühlkanälen (21) in Fluidverbindung mit wenigstens einem Reaktivkanal (3) einer benachbarten Schicht von Reaktivkanälen (20) steht, die oberhalb oder unterhalb der vorbestimmten Schicht von Kühlkanälen (21) angeordnet ist.

8. Reaktor nach einem der Ansprüche 2 bis 6, ausgenommen Anspruch 3, **dadurch gekennzeichnet, dass** ein vorbestimmter Verteilerkanal (40) einer vorbestimmten Schicht von Kühlkanälen (21) in Fluidverbindung mit wenigstens einem Reaktivkanal (3) einer benachbarten ersten Schicht von Reaktivkanälen (20) steht, die oberhalb der vorbestimmten Schicht von Kühlkanälen (21) angeordnet ist, und mit wenigstens einem Reaktivkanal (3) einer benachbarten zweiten Schicht von Reaktivkanälen (20), die unterhalb der vorbestimmten Schicht von Kühlkanälen (21) angeordnet ist, wobei die erste und die zweite Schicht von Reaktivkanälen (20) auf diese Weise auf beiden Seiten der vorbestimmten Schicht von Kühlkanälen (21) angeordnet sind.

9. Reaktor nach einem der vorhergehenden Ansprüche, **dadurch gekennzeichnet, dass** die Reaktivkanäle (3) einen Katalysator, insbesondere einen körnigen Katalysator, umfassen und dass die Verteileröffnung(en) (41) ein Filterelement (50) umfasst (umfassen), welches insbesondere aus geschäumtem Metall und/oder Sintermaterial, z.B. Edelstahl, Messing, Bronze, Nickellegierungen, Aluminium, gebildet ist.

10. Reaktor nach Anspruch 9, **dadurch gekennzeichnet, dass** das Filterelement (50) als Filterzunge (50) vorliegt, die sich entlang einer Trennplatte (11) erstreckt, welche zwischen einer Schicht von Reaktivkanälen (20) und einer Schicht von Kühlkanälen (21) angeordnet ist.

11. Verfahren zur Herstellung eines Platten-Austauscherreaktors (1) nach einem der vorhergehenden Ansprüche, mit Ausnahme von Anspruch 3, welches zur Durchführung endothermer oder exothermer Reaktionen bestimmt ist und einen Reaktorkörper (2) umfasst, der durch Stapeln einer Mehrzahl von Platten (10, 11, 12, 13) gebildet wird, **dadurch gekennzeichnet, dass** es die folgenden Schritte umfasst:
(i) Herstellung wenigstens einer Schicht von Reaktivkanälen (20), welche ausschließlich eine Mehrzahl von Reaktivkanälen (3) umfasst,
(ii) Herstellen wenigstens einer Schicht von Kühlkanälen (21), welche ausschließlich eine Mehrzahl von Kühlkanälen (4) umfasst, die zum Kühlen der Reaktivkanäle (3) bestimmt sind,
(iii) Herstellen wenigstens einer Schicht von Reaktivkanälen (20), welche eine Mehrzahl von Reaktivkanälen (3) und einen oder mehrere Injektionskanäle (30) umfasst,
(iv) Herstellen wenigstens einer Schicht von Kühlkanälen (21), welche eine Mehrzahl von Kühlkanälen (4) und einen oder mehrere Verteilerkanäle (40) umfasst.

12. Verfahren nach Anspruch 11, **dadurch gekennzeichnet, dass** es ferner die folgenden Schritte umfasst:
(v) Herstellen wenigstens einer Verschlussplatte (10), die dazu bestimmt ist, wenigstens teilweise die Außenfläche (Se) des Reaktorkörpers (2) zu bilden,
(vi) Herstellung wenigstens einer als "Trennplatte" (11) bezeichneten Platte, die dazu bestimmt ist, zwischen zwei Platten, die Bestandteile des Platten-Tauscherreaktors (1) sind, insbesondere zwischen einer Schicht von Reaktivkanälen (20) und einer Schicht von Kühlkanälen (21), aufeinander gelegt zu werden.

13. Verfahren nach Anspruch 12, **dadurch gekennzeichnet, dass** wenigstens eine Trennplatte (11) eine oder mehrere Einspritzöffnungen (31) und/oder eine oder mehrere Verteileröffnungen (41) aufweist.

14. Verfahren nach einem der Ansprüche 11 bis 13, **dadurch gekennzeichnet, dass** der Austauscherreaktor (1) durch Hartlöten, additive Fertigung oder durch HeißIsostatisches Pressen (HIC) hergestellt wird.

## Claims

1. Plate exchanger reactor (1), for implementing endothermic or exothermic reactions, including:
- a reactor body (2), formed by the stacking of a plurality of plates (10, 11, 12,13),
- a reactive circuit comprising at least one reactive channel layer (20) comprising a plurality of reactive channels (3) extending substantially parallel with one another in a first direction (D1), wherein a first reactive fluid (A) circulates,
- a heat transfer fluid circuit for cooling the reactive channels (3), comprising at least one cooling channel layer (21) comprising a plurality of cooling channels (4) extending substantially parallel with one another in a second direction (D2), wherein a coolant (B) circulates,
the first (D1) and second (D2) directions are substantially perpendicular to one another,
at least one reactive channel layer (20) and a cooling channel layer (21) are superimposed on one another alternately,
the plate exchanger reactor (1) includes at least one channel (30) for injecting a second reactive fluid (C) and at least one channel (40) for distributing the second reactive fluid (C) in at least one reactive channel (3) wherein the first reactive fluid (A) circulates, said at least one injection channel (30) fluidically communicating with said at least one distribution channel (40) by means of at least one injection opening (31) and said at least one distribution channel (40) fluidically communicating with said at least one reactive channel (3) by means of a distribution opening (41),
the distribution channel or channels (40) are each located in a cooling channel layer (21) and extending substantially parallel with the second direction (D2),
**characterised in that** a predetermined injection channel (30) fluidically communicates with at least two distribution channels (40), which themselves fluidically communicate with at least two reactive channels (3) so that an injection of the second reactive fluid (C) by means of the predetermined injection channel (30) makes it possible to supply a plurality of reactive channels (3) of the same reactive channel layer (20).

2. Exchanger reactor according to claim 1, **characterised in that** the injection channel or channels (30) are each located in a reactive channel layer (20) and extend substantially parallel with the first direction (D1).

3. Exchanger reactor according to claim 1, **characterised in that** the injection channel or channels (30) are channels formed in the reactor body (2) so as to extend substantially perpendicular to the first (D1) and second (D2) directions, in particular between adjacent cooling channels (4).

4. Reactor according to any one of the preceding claims, **characterised in that** a predetermined distribution channel (40) fluidically communicates with a plurality of reactive channels (3) by means of a plurality of distribution openings (41) configured such that the flow rate of the second reactive fluid (C) is substantially identical for each distribution opening (41), each distribution opening (41) having in particular substantially the same passage section.

5. Reactor according to any one of claims 2 to 4, except for claim 3, **characterised in that** a predetermined injection channel (30) of a predetermined reactive channel layer (20) fluidically communicates with at least one distribution channel (40) of an adjacent cooling channel layer (21), located above or below the predetermined reactive channel layer (20).

6. Reactor according to any one of claims 2 to 4, except for claim 3, **characterised in that** a predetermined injection channel (30) of a predetermined reactive channel layer (20) fluidically communicates with at least one distribution channel (40) of a first adjacent cooling channel layer (21) located above the predetermined reactive channel layer (20) and with at least one distribution channel (40) of a second adjacent cooling channel layer (21) located below the predetermined reactive channel layer (20), the first and second cooling channel layers (21) thus being located on either side of the predetermined reactive channel layer (20).

7. Reactor according to any one of claims 2 to 6, except for claim 3, **characterised in that** a predetermined distribution channel (40) of a predetermined cooling channel layer (21) fluidically communicates with at least one reactive channel (3) of an adjacent reactive channel layer (20), located above or below the predetermined cooling channel layer (21).

8. Reactor according to any one of claims 2 to 6, except for claim 3, **characterised in that** a predetermined distribution channel (40) of a predetermined cooling channel layer (21) fluidically communicates with at least one reactive channel (3) of a first adjacent reactive channel layer (20) located above the predetermined cooling channel layer (21) and with at least one reactive channel (3) of a second adjacent reactive channel layer (20) located below the predetermined cooling channel layer (21), the first and second reactive channel layers (20) thus being located on either side of the predetermined cooling channel layer (21).

9. Reactor according to any one of the preceding claims, **characterised in that** the reactive channels (3) include a catalyst, in particular a grain catalyst, and **in that** the distribution opening or openings (41) include a filter element (50), in particular made of metallic foam and/or sintered material, for example stainless steel, brass, bronze, nickel alloys, aluminium.

10. Reactor according to claim 9, **characterised in that** the filter element (50) is in the form of a filtering strip (50) extending along a separation plate (11) located between a reactive channel layer (20) and a cooling channel layer (21).

11. Method for manufacturing a plate exchanger reactor (1) according to any one of the preceding claims, except for claim 3, for implementing endothermic or exothermic reactions and comprising a reactor body (2) formed by the stacking of a plurality of plates (10, 11, 12, 13), **characterised in that** it includes the following steps:
(i) manufacturing at least one reactive channel layer (20) comprising only a plurality of reactive channels (3),
(ii) manufacturing at least one cooling channel layer (21) comprising only a plurality of cooling channels (4) for cooling the reactive channels (3),
(iii) manufacturing at least one reactive channel layer (20) comprising a plurality of reactive channels (3) and one or more injection channels (30),
(iv) manufacturing at least one cooling channel layer (21) comprising a plurality of cooling channels (4) and one or more distribution channels (40).

12. Method according to claim 11, **characterised in that** it further includes the following steps:
(v) manufacturing at least one closing plate (10) for forming at least partially the outer surface (Se) of the reactor body (2),
(vi) manufacturing at least one plate known as a "separation plate" (11) intended to be superimposed between two constituent layers of the plate exchanger reactor (1), in particular between a reactive channel layer (20) and a cooling channel layer (21).

13. Method according to claim 12, **characterised in that** at least one separation plate (11) includes one or more injection openings (31) and/or one or more distribution openings (41).

14. Method according to one of claims 11 to 13, **characterised in that** the exchanger reactor (1) is manufactured by brazing, by additive manufacturing or also by Hot Isostatic Pressing (HIP).
